Europäisches Patentamt

European Patent Office

Office européen des brevets

(11) Veröffentlichungsnummer: **0 434 963 A2**

# (12) EUROPÄISCHE PATENTANMELDUNG

(21) Anmeldenummer: 90122028.5

(51) Int. Cl.5: **H02H 9/00**, H02H 9/04

(22) Anmeldetag: 17.11.90

(30) Priorität: 29.12.89 DE 3943279

(43) Veröffentlichungstag der Anmeldung:
03.07.91 Patentblatt 91/27

(84) Benannte Vertragsstaaten:
**DE FR GB**

(71) Anmelder: **ROBERT BOSCH GmbH**
**Postfach 10 60 50**
**W-7000 Stuttgart 10(DE)**

(72) Erfinder: **Bodig, Bernd**
**Richard-Wagner-Strasse 5A**
**W-7141 Schwieberdingen(DE)**
Erfinder: **Hueser, Klaus, Dipl.-Ing.**
**Düneneck 24**
**W-2252 St. Peter-Ording(DE)**

(54) **Schaltung zum Ausgleichen sehr schneller Stromschwankungen.**

(57) Eine Schaltung zum Ausgleichen sehr schneller Stromschwankungen, wie sie in einem Paar von Leitungen (11.1, 11.2) einer Verbraucherschaltung (12) auftreten, weist einen npn-Transistor (17), eine Basisdiode (18), einen Basiswiderstand (19), eine Kollektordiode (20) und einen Kollektorwiderstand (21) auf. Durch die Stromausgleichsschaltung (10) fließt dann ein Strom vorgegebener Stärke, wenn durch die Verbraucherschaltung ein Normalstrom, d. h. ein Strom ohne Spitzen und Einbrüche, fließt. Kommt es jedoch zu einem Spannungseinbruch, reduziert die Stromausgleichsschaltung sehr schnell ihren eigenen Strombedarf, wodurch mehr Strom für die Verbraucherschaltung zur Verfügung steht. Das sehr schnelle Schalten erfolgt dadurch, daß der Transistor mit Hilfe der Sperrschichtkapazität der Basisdiode mit Steuerstrom versorgt wird und der Transistor eine hohe Transitfrequenz aufweist.

Damit die Schaltung möglichst schnell reagiert, ist sie so dicht wie möglich bei der Verbraucherschaltung anzuordnen.

Fig. 2

# SCHALTUNG ZUM AUSGLEICHEN SEHR SCHNELLER STROMSCHWANKUNGEN

Die Erfindung betrifft eine Schaltung zum Ausgleichen sehr schneller Stromschwankungen, wie sie in einem Leitungspaar einer Verbraucherschaltung auftreten. Als Verbraucherschaltung kommen typischerweise CMOS-Schaltungen oder Mikroprozessoren in Frage. Bei derartigen Schaltungen treten bei Arbeitstakten teilweise starke Stromspitzen und Stromeinbrüche auf, d. h. sehr kurzzeitige Änderungen (im Nanosekundenbereich), in denen der Strom um einige 10 % höher oder tiefer liegt als im Normalfall, der dann vorliegt, wenn sich der Stromfluß auf einen im wesentlichen konstanten Wert eingestellt hat. Bei CMOS-Schaltungen kommt es zu starken Stromeinbrüchen insbesondere beim Durchschalten, da dabei kurzfristig ein Kurzschluß auftritt.

Die Stromänderungen können sowohl in einem Leitungspaar erfolgen, das der Schaltung Signale oder Energie zuführt, wie auch in einem Leitungspaar, das Signale oder Energie ausgibt.

Stand der Technik

Konstantstromquellen, die insbesondere Stromeinbrüche verhindern sollen, sowie Überspannungs-Schutzschaltungen, die insbesondere zu hohe Stromspitzen verhindern sollen, sind in zahlreichen Ausführungsartenbekannt. Diese Schaltungen sind jedoch nicht dazu in der Lage, sehr schnelle Stromschwankungen im Nanosekundenbereich zufriedenstellend auszugleichen. Trotz der vielen Arten von Schaltungen mit den eben genannten Funktionen besteht daher seit langem unverändert das Problem, Schaltungen anzugeben, die auch sehr schnelle Stromschwankungen zufriedenstellend ausgleichen können.

Darstellung der Erfindung

Ein erster Typ erfindungsgemäßer Schaltungen zum Ausgleichen sehr schneller Stromschwankungen, wie sie in einem Leitungspaar einer Verbraucherschaltung auftreten, weist ein Halbleiterbauteil mit einem pn-Übergang auf, dessen Sperrschichtkapazität als sehr schneller Ladungspuffer verwendet wird, und das in Sperrichtung zwischen die betroffenen Leitungen der Verbraucherschaltung möglichst dicht bei derselben gelegt ist.

Ein zweiter Typ erfindungsgemäßer Schaltungen zum Ausgleichen sehr schneller Stromschwankungen, wie sie in einem Leitungspaar einer Verbraucherschaltung auftreten, weist eine Bipolartransistorschaltung auf, die so ausgebildet ist, daß sie

- möglichst dicht bei der Verbraucherschaltung zwischen den betroffenen Leitungen angeordnet ist,
- bei Normalstrom durch die Verbraucherschaltung, d. h. bei einem Strom ohne Spitzen und Einbrüche, einen Strom aufweist, der in etwa dem Stromunterschiedswert entspricht, wie er zwischen Normalstrom und Stromextremwerten, d. h. dem Strom bei einer Spitze oder einem Einbruch, besteht,
- den Strom durch sich sehr schnell absenkt, wenn die Potentialdifferenz der Spannungen der Leitungen des Leitungspaars abfällt,
- und den Strom durch sich sehr schnell anhebt, wenn die Potentialdifferenz der Spannungen der Leitungen des Leitungspaares abfällt.

Wenn die Verbraucherschaltung ein IC ist, sind die genannten Schaltungen vorzugsweise in dem IC integriert.

Den beiden erfindungsgemäßen Schaltungstypen ist gemeinsam, daß sie pn-Halbleiterbauteile nutzen, die so dicht wie möglich bei der Verbraucherschaltung zwischen dem betroffenen Leitungspaar angeordnet sind. Beim ersten Typ wirkt das pn-Halbleiterbauteil als sehr schneller Kondensator, der aufgrund seiner Sperrschichtkapazität sehr schnell Ladungen aufnehmen oder abgeben kann, um dadurch Stromspitzen bzw. Stromeinbrüche abzuflachen. Der zweite erfindungsgemäße Schaltungstyp beruht auf dem Prinzip, daß die verwendete pn-Halbleiterschaltung ebenfalls eine Verbraucherschaltung darstellt, die jedoch bei Stromschwankungen schneller reagiert als die zu schützende Verbraucherschaltung. Zieht die zu schützende Verbraucherschaltung z. B. 100 mA Normalstrom, aber etwa 200 mA Strom beim Durchschalten, wird die pn-Halbleiterschaltung, nämlich eine Bipolartransistorschaltung, so ausgelegt, daß durch sie im Normalfall der Differenzbetrag zwischen dem genannten Stromextremwert und dem Normalstrom fließt, also 100 mA. Droht nun die Spannung an der zu schützenden Verbraucherschaltung, und damit der Strom im betroffenen Leitungspaar, einzubrechen, verringert die Bipolartransistorschaltung angesichts der abfallenden Spannung sehr schnell den Strom durch sich selbst, wodurch dieser Strom der zu schützenden Verbraucherschaltung zusätzlich zur Verfügung steht. Entsprechend schaltet die Bipolartransistorschaltung auf höheren eigenen Stromverbrauch, wenn sie aufgrund eines Spannungsanstiegs im betroffenen Leitungspaar feststellt, daß durch die Leitungen der Verbraucherschaltung mehr Strom fließen könnte, als diese zu schützende Schaltung verträgt, ohne Schaden zu nehmen.

Zeichnung

Die Erfindung wird im folgenden anhand von durch Figuren veranschaulichten Ausführungsbeispielen näher erläutert. Es zeigen:

Fig. 1   eine Schaltung zum Ausgleichen sehr schneller Stromschwankungen mit einer Diode, die möglichst dicht bei einer zu schützenden Verbraucherschaltung angeordnet ist;

Fig. 2   eine Bipolartransistorschaltung als Schaltung zum Ausgleichen sehr schneller Stromschwankungen, die möglichst dicht bei einer zu schützenden Verbraucherschaltung angeordnet ist; und

Fig. 3   eine Emitterfolgerschaltung ähnlich der von Fig. 2.

Beschreibung von Ausführungsbeispielen

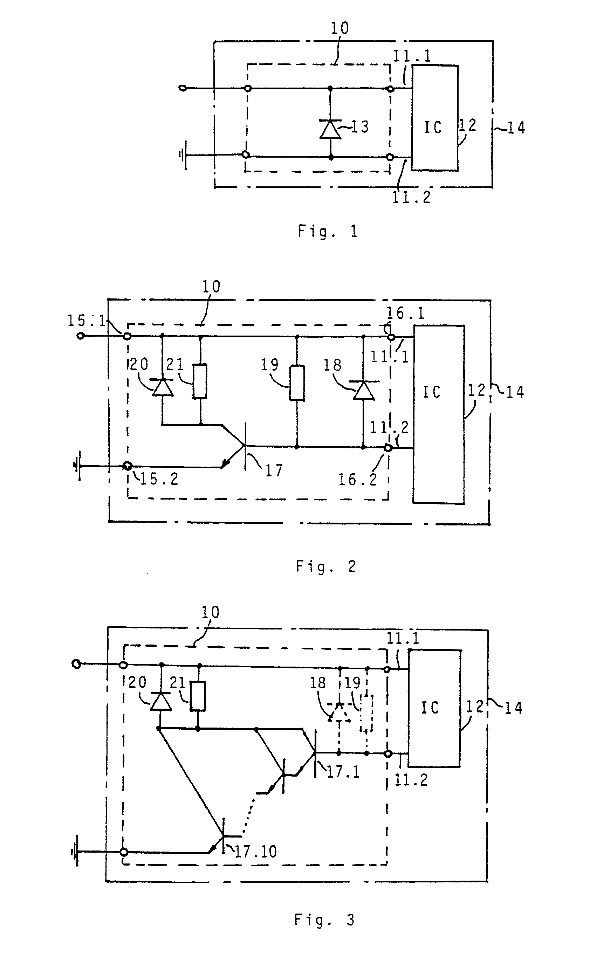

Fig. 1 zeigt eine Schaltung 10 zum Ausgleichen sehr schneller Stromschwankungen, wie sie in einem Paar von Leitungen 11.1 und 11.2 einer Verbraucherschaltung 12 auftreten können. Die Verbraucherschaltung ist z. B. eine CMOS-Schaltung oder ein Mikroprozessor oder ein anderer IC. Die Stromausgleichsschaltung 10 besteht lediglich aus einer Diode 13, die in Sperrichtung zwischen die Leitungen 11.1 und 11.2 gelegt ist. Vorzugsweise ist die Diode 13 in der Verbraucherschaltung 12 integriert, so daß eine Gesamtschaltung 14 gebildet ist.

Die Diode dient bei der angegebenen Schaltung als sehr schneller Kondensator, mit einem Kapazitätswert, der der Sperrschichtkapazität des pn-Übergangs der Halbleiterdiode 13 entspricht. Vorzugsweise ist die Halbleiterdiode 13 eine Leistungsdiode mit möglichst hohem Durchlaßstrom. Auf den Durchlaßstrom kommt es in der genannten Beschaltung allerdings in keiner Weise an, sondern vielmehr darauf, daß Leistungsdioden mit hohem Durchlaßstrom einen großflächigen pn-Übergang, also hohe Sperrschichtkapazität, aufweisen. Damit können auch Stromspitzen oder Stromeinbrüche mit größerem Energieinhalt ausgeglichen werden. Die Verbindungsdrähte zwischen dem pn-Übergang und den Leitungen 11.1 und 11.2 sollen so kurz wie möglich gehalten werden, um die Leitungsinduktivität so gering wie möglich zu halten. Aus diesem Grund wird die Diode vorzugsweise in die Verbraucherschaltung 12 integriert. In diesem Fall kann die Diode so ausgebildet werden, daß sie eine möglichst große Sperrschichtkapazität aufweist. Es können dann auch mehrere pn-Übergänge parallel geschaltet werden, um den Kapazitätswert zu erhöhen.

Bei der Schaltung gemäß Fig. 2 ist die Stromausgleichsschaltung 10 als Bipolartransistorschaltung ausgebildet. Auch diese Stromausgleichsschaltung ist vorzugsweise mit einer Verbraucherschaltung 12 zu einer integrierten Gesamtschaltung 14 zusammengefaßt.

Die Stromausgleichsschaltung 10 gemäß Fig. 2 weist zwei Eingänge 15. 1 und 15.2 sowie zwei Ausgänge 16.1 und 16.2 auf. An den einen Ausgang 16.1 ist die eine Leitung 11.1 der Verbraucherschaltung 12 angeschlossen, während die andere Leitung 11.2 mit dem anderen Ausgang 16.2 verbunden ist. Der erste Eingang 15.1 liegt beim Ausführungsbeispiel auf + 5 V, während der zweite Eingangsanschluß auf 0 V liegt.

Die Stromausgleichsschaltung 10 gemäß Fig. 2 verfügt über einen npn-Transistor 17, eine Basisdiode 18, einen Basiswiderstand 19, eine Kollektordiode 20 und einen Kollektorwiderstand 21. Die Basisdiode 18 und der Basiswiderstand 19 verbinden die Basis des Transistors 17 mit einer durchgehenden Leitung zwischen dem Eingang 15.1 und dem Ausgang 16.1. Mit dieser Leitung ist auch der Kollektor des Transistors 17 über die Kollektordiode 20 und den Kollektorwiderstand 21 verbunden. Vom zweiten Eingang 15.2 führt eine Verbindung zum Emitter des Transistors 17. Der zweite Ausgang 16.2 ist mit der Basis verbunden.

Der Transistor 17 ist ein beliebiger Transistor mit möglichst hoher Transitfrequenz, möglichst mit einigen 100 MHz bis einigen wenigen GHz, z. B. ein Hochgeschwindigkeitstransistor für Tuner. Als Beispiele aus einer großen Anzahl verwendbarer Typen seien der Transistor BFR 29 A der Firma Valvo oder der Transistor vom Typ BFY 90 von derselben Firma genannt. Der Basiswiderstand 19 weist beim Ausführungsbeispiel etwa 100 Ohm auf, um bei einer Eingangsspannung von 5 V einen Arbeitspunkt von 2,5 V einzustellen. Der Kollektorwiderstand 21 weist einen Widerstandswert von 25 Ohm auf. Es fließen dann 100 mA durch ihn, wenn der Transistor 17 im Arbeitspunkt betrieben wird, also wenn die Potentialdifferenz der Spannungen der Leitungen 11.1 und 11.2 5 V beträgt.

Die Basisdiode 18 dient dazu, dem Transistor 17 so schnell wie möglich einen Schaltstrom zur Verfügung zu stellen, wenn sich die Potentialdifferenz der Spannungen der Leitungen 11.1 und 11.2 ändert. Fällt die Spannung beim Durchschalten der Verbraucherschaltung 12 aufgrund eines Signals über die Leitungen 11.1 und 11.2 ab, läßt der Transistor 17 nur noch einen geringeren Strom durch den Kollektorwiderstand 21 fließen, z. B. nur noch 30 mA. Da dann durch die Stromausgleichsschaltung 10 70 mA weniger fließen als im Normalfall (Potentialdifferenz 5 V zwischen den Leitungen 11.1 und 11.2), stehen diese 70 mA als zusätzlicher Strom für die Verbraucherschaltung 12 zur Verfügung. Die Kollektordiode 20 wirkt als sehr schneller Kondensator, hat also eine Funktion, die genau der Funktion der Diode 13 beim Ausführungsbeispiel gemäß Fig. 1 entspricht.

Beim Erläutern der Schaltung von Fig. 2 wurde davon ausgegangen, daß diejenigen Anschlüsse der Stromausgleichsschaltung 10, die mit den Leitungen 11.1 bzw. 11.2 der Verbraucherschaltung 12 in Verbindung stehen, die Ausgänge der Stromausgleichsschaltung sind. In diesem Fall sind die genannten Leitungen solche, über die Versorgungsenergie zugeführt wird oder Schaltpulse zugeführt werden. Wird über die genannten Leitungen dagegen Energie ausgegeben oder werden Schaltpulse ausgegeben, sind die Funktionen der Anschlüsse in bezug auf Ausgangsfunktion und Eingangsfunktiongerade vertauscht. Am Aufbau der Schaltung und deren Wirkung ändert dies nichts.

Beim Beschreiben der Funktion der Schaltung gemäß Fig. 2 wurde angenommen, daß die Potentialdifferenz der Spannungen der Leitungen 11.1 und 11.2 und damit der Strom durch diese Leitungen einzubrechen drohen. Es kann jedoch auch der Fall auftreten, daß auf einen Ausschaltpuls hin eine Spannungs- und damit eine Stromspitze aufzutreten drohen, nämlich aufgrund der Wirkung induktiver Bauteile. In diesem Fall sorgt der Transistor 17 für erhöhten Stromfluß durch die Stromausgleichsschaltung 10. Für sehr schnelles Schaltverhalten sorgen dabei wiederum die Eigenschaften der pn-Übergänge der Basisdiode 18 und des npn-Transistors 17.

Das Ausführungsbeispiel gemäß Fig. 3 weist hohe Stromverstärkung aufgrund einer Emitterfolgerschaltung auf. Es liegen zehn npn-Transistoren 17.1 - 17.10 vor. An jedem fallen jeweils etwa 0,5 V ab, so daß der gesamte Spannungsabfall zwischen der Basis des ersten Transistors 17.1 und dem Emitter des zehnten Transistors 17.10 etwa 5 V beträgt. Diese zehn Transistoren ersetzen den einzelnen Transistor 17 der Schaltung gemäß Fig. 2. Die Basisdiode 18 und der Basiswiderstand 19 können wegfallen, weswegen diese Bauteile in Fig. 3 nur gestrichelt eingezeichnet sind. Die Schaltung ohne Basiswiderstand läßt sich besonders gut integrieren. Die Schaltung gemäß Fig. 3, ob mit oder ohne Basiswiderstand 19, ist sehr schnell und weist hohe Stromverstärkung auf, so daß Stromspitzen und Stromeinbrüche in den Leitungen 11.1 und 11.2 sehr wirkungsvoll aufgefangen werden können.

Statt npn-Transistoren, wie in den Fig. 2 und 3 dargestellt, können ohne weiteres auch pnp-Transistoren verwendet werden, wenn nur darauf geachtet wird, daß die Transistoren schneller schalten, als es der Zeitkonstanten von Stromänderungen entspricht, wie sie im Leitungspaar einer Verbraucherschaltung auftreten können.

Bei der Schaltung gemäß Fig. 3 kann der Basiswiderstand 19 wegfallen, wenn der Emitterfolger ausreichend viele Transistoren aufweist, um den Potentialunterschied zwischen den Leitungen 11.1 und 11.2 zu überbrücken. Stattdessen ist es auch möglich, einen Emitterfolger mit weniger Transistoren einzusetzen, und dann noch einen Basiswiderstand zu verwenden, der jedoch geringeren Widerstandswert aufweisen kann als der Basiswiderstand der Schaltung gemäß Fig. 2. Auch andere Schaltungen sind realisierbar, die dafür sorgen, daß eine Stromausgleichsschaltung bei Normalstrom durch eine Verbraucherschaltung einen vorgegebenen Strom zieht, der bei erhöhtem Strombedarf der Verbraucherschaltung sehr schnell erniedrigt wird, der aber andererseits sehr schnell erhöht wird, wenn bei einem Spannungsanstieg die Verbraucherschaltung vor erhöhtem Strom geschützt werden muß.

Es sei darauf hingewiesen, daß parallel zur Basisdiode 18 und/oder zur Kollektordiode 20 noch Kondensatoren geschaltet werden können. Die Dioden sorgen dann für sehr schnelle Schalt- bzw. Ausgleichsvorgänge, allerdings geringer Leistung, während die Kondensatoren dieselbe Funktion mit etwas längerer Zeitkonstanten, aber dafür mit größerer Leistung ausführen.

**Ansprüche**

1. Schaltung zum Ausgleichen sehr schneller Stromschwankungen, wie sie in einem Leitungspaar einer Verbraucherschaltung auftreten, **gekennzeichnet durch** ein Halbleiterbauteil (13) mit einem pn-Übergang, dessen Sperrschichtkapazität als sehr schneller Ladungspuffer verwendet wird, und das in Sperrichtung zwischen die betroffenen Leitungen (11.1, 11.2) der Verbraucherschaltung (12) möglichst dicht bei derselben gelegt ist.

2. Schaltung nach Anspruch 1, **dadurch gekennzeichnet,** daß die Verbraucherschaltung ein IC (12) ist und das Halbleiterbauteil eine Diode (13) ist, die in den IC integriert ist.

3. Schaltung zum Ausgleichen sehr schneller Stromschwankungen, wie sie in einem Leitungspaar (11.1, 11.2) einer Verbraucherschaltung (12) auftreten, **gekennzeichnet durch** eine Bipolartransistorschaltung (10), die so ausgebildet ist, daß sie
   - möglichst dicht bei der Verbraucherschaltung (12) zwischen den betroffenen Leitungen (11.1., 11.2) angeordnet ist,
   - beim Normalstrom durch die Verbraucherschaltung, d. h. bei einem Strom ohne Spitzen und Einbrüche, einen Strom aufweist, der in etwa dem Stromunterschiedswert entspricht, wie er zwischen Normalstrom und Stromminimalwert, d. h. dem Strom bei einem Spannungseinbruch, besteht,

- den Strom durch sich sehr schnell absenkt, wenn die Potentialdifferenz der Spannungen der Leitungen des Leitungspaares abfällt,

- und den Strom durch sich sehr schnell anhebt, wenn die Potentialdifferenz der Spannungen der Leitungen des Leitungspaares ansteigt.

4. Schaltung nach Anspruch 3, **dadurch gekennzeichnet,** daß die Verbraucherschaltung ein IC (12) ist und die Bipolartransistorschaltung (10) in dem IC integriert ist.

Fig. 1

Fig. 2

Fig. 3